Europäisches Patentamt

(19) European Patent Office

Office européen des brevets

(11) Veröffentlichungsnummer: **0 205 774**
**B1**

(12) **EUROPÄISCHE PATENTSCHRIFT**

(45) Veröffentlichungstag der Patentschrift:
**17.05.89**

(21) Anmeldenummer: **86103978.2**

(22) Anmeldetag: **22.03.86**

(51) Int. Cl.⁴: **C08L 95/00, C10C 1/00,**
**D06N 5/00**
**// C08L21/00, C08L23/00,**
**C08K3/00**

(54) **Bituminöse Masse und ihre Verwendung.**

(30) Priorität: **15.06.85 DE 3521597**

(43) Veröffentlichungstag der Anmeldung:
**30.12.86 Patentblatt 86/52**

(45) Bekanntmachung des Hinweises auf die Patenterteilung:
**17.05.89 Patentblatt 89/20**

(84) Benannte Vertragsstaaten:
**BE DE FR GB IT NL**

(56) Entgegenhaltungen:
**EP-A- 0 009 432**
**US-A- 2 847 359**

(73) Patentinhaber: **RÜTGERSWERKE**
**AKTIENGESELLSCHAFT, Mainzer Landstrasse 217,**
**D-6000 Frankfurt am Main 1(DE)**

(72) Erfinder: **Omran, Jafar, Dr., Ahornstrasse 25,**
**D-4620 Castrop-Rauxel(DE)**
Erfinder: **Rühl, Karl, Dr., Hochwaldstrasse 13,**
**D-6350 Bad Nauheim(DE)**
Erfinder: **Scherp, Ernst, Erlenweg 5,**
**D-6454 Bruchköbel(DE)**
Erfinder: **Zander, Maximilian, Prof. Dr., Friedenstrasse 9,**
**D-4620 Castrop-Rauxel(DE)**

## Beschreibung

Die Erfindung betrifft eine mit Kunststoffen und Füllstoffen modifizierte Masse und ihre Verwendung zur Herstellung von Bauwerksabdichtungen, insbesondere von Dachdichtungsbahnen.

Bitumen wird im allgemeinen aus den Rückständen der Rohöldestillation hergestellt. Es enthält je nach Art des Rohöls unterschiedliche Mengen an paraffinischen, naphthenischen und aromatischen Bestandteilen und zeigt entsprechend seiner Zusammensetzung jeweils ein unterschiedliches chemisches Verhalten. So ist nicht jeder Rohölrückstand für die Bitumen-Herstellung geeignet.

Je nach Destillationsgrad werden mehr oder weniger harte Bitumina mit unterschiedlichen physikalischen Eigenschaften erhalten. Besonders harte Bitumina werden bei der Hochvakuum-Destillation durch Abtrennen hochsiedender Zylinderöle gewonnen. Eine andere Möglichkeit, aus weichem Destillationsbitumen härtere Bitumentypen zu erzeugen, ist das Verblasen mit Luft, gegebenenfalls unter Verwendung von Katalysatoren. Das so hergestellte geblasene Bitumen hat gegenüber einem vergleichbaren Destillationsbitumen eine höhere Elastizität. Außerdem läßt sich Bitumen durch selektive Fällungsreaktionen aus Erdölfraktionen gewinnen. So fällt beispielsweise bei der Propan-Extraktion zur Herstellung hochwertiger Schmieröle ein Extraktionsbitumen als Nebenprodukt an. Alle diese unterschiedlichen Bitumentypen sind heute auf dem Markt vorhanden.

Ebenso vielfältig wie die Bitumentypen sind auch ihre Verwendungsmöglichkeiten als Bindemittel oder Dichtungs- und Isoliermittel im Bauwesen. Das von den Raffinerien gelieferte Bitumen kann jedoch heute nur noch in wenigen Fällen ohne vorherige Aufarbeitung direkt als Baustoff verwendet werden. Infolge der gestiegenen Anforderungen werden die Bitumina daher durch Zusätze von Füllstoffen, Weichmachern und Kunststoffen modifiziert.

Wegen der ständig gestiegenen Rohölpreise werden in den Raffinerien die Rohöldestillationsrückstände mehr und mehr Spaltprozessen unterworfen, um durch eine höhere Ölausbeute das Aufarbeitungsverfahren wirtschaftlicher zu gestalten. Als Rückstände fallen dabei sogenannte Krackteere an, die wegen ihrer Temperatur- und Sauerstoffempfindlichkeit (Abraham: Asphalts and allied Substances, Vol. 2, 6th Ed., Seite 163) nicht für die Bitumen-Herstellung geeignet sind. So werden beispielsweise Visbreaker-Rückstände als schweres Heizöl genutzt, dessen Viskosität durch Zumischen von Mitteldestillaten eingestellt werden kann (Ullmanns Encyklopädie der technischen Chemie, 4. Auflage, Band 10, Seite 668).

Da für die Bitumen-Herstellung geeignete preiswerte Rohstoffe in immer geringerem Maße zur Verfügung stehen, bestand die Aufgabe, die Rohstoffbasis zu erweitern und aus bisher für diese Zwecke nicht verwendeten mineralölstämmigen Rückständen bituminöse Massen zu entwickeln und geeignete Verwendungsmöglichkeiten bei der Herstellung von Bauwerksabdichtungen für diese Massen zu finden.

Die Aufgabe wird erfindungsgemäß durch eine bituminöse Masse gelöst, die aus einem Gemisch aus einem Rückstand, erhältlich aus dem Visbreaking-Prozeß beim Einsatz von überwiegend paraffinisch-naphthenischen Rohöldestillationsrückständen, mit einem Flammpunkt oberhalb 250°C, einem Siedebeginn im Bereich von 340 bis 550°C, einem Erweichungspunkt (Ring und Kugel) von 25 bis 65°C und einer Penetration von maximal 300 · 1/10 mm, 1 bis 25 Gew.-% – bezogen auf das Gemisch – eines natürlichen oder synthetischen Kautschuks, eines Polyolefins oder einer Mischung aus diesen Stoffen und 20 bis 50 Gew.-% – bezogen auf das Gemisch – eines Füllstoffs und gegebenenfalls Weichmachern und/oder weiteren Polymeren besteht, und bei einer Temperatur zwischen 120 und 190°C homogen vermischt ist.

Visbreaker-Rückstände sind in hohem Maße temperaturempfindlich und wenig oxidationsbeständig. Sie zeigen daher keine für die Verwendung als Bitumen für Bauwerksabdichtungen ausreichende Alterungsbeständigkeit (Fuel, 1984, Vol. 63, Seiten 1515 - 1517). Es war daher überraschend, daß die erfindungsgemäße Masse selbst bei einer Temperatur von 180 °C unter ständiger Bewegung in Gegenwart von Luft nur eine Zunahme des Erweichungspunktes und eine Verminderung der Penetration aufwies, die etwa in der gleichen Größenordnung lagen wie bei einem vergleichbaren Destillationsbitumen. Die Alterungsbeständigkeit dieser Masse entspricht also der eines vergleichbaren Destillationsbitumens.

Vorzugsweise werden Visbreaker-Rückstände mit einem Erweichungspunkt (Ring und Kugel) von etwa 40 °C und einem Siedebeginn von 480 °C verwendet. Diese Rückstände haben eine Penetration von etwa 208 . 1/10 mm. Sie besitzen selbst keine ausreichende Elastizität, erhalten aber durch das Zumischen von 2,5 bis 5 Gew.-% Kautschuk - bezogen auf die Rückstände - bereits Eigenschaften, die denen reiner Bitumenmassen oder entsprechender Bitumen-Kautschuk- Massen überlegen sind.

Für Polymerzusätze über 15 Gew.-% werden vorzugsweise Visbreaker-Rückstände mit einem Erweichungspunkt (R.u.K.) von weniger als 40 °C verwendet. Die Verarbeitbarkeit wird dadurch verbessert. Die Verwendung von Visbreaker-Rückständen mit einem Erweichungspunkt (R.u.K.) von mehr als 65 °C ist nur möglich, wenn zusätzlich Weichmacher wie beispielsweise Gasöle aus der Vakuumdestillation des Visbreakers zugegeben werden.

Als Kautschuk können alle festen unvulkanisierten Naturkautschuke ebenso verwendet werden wie die Synthesekautschuke, also Styrol-Butadien-Mischpolymerisate, Butadien-Acrylnitril-Mischpolymerisate, Polyisopren, Polybutadien, Ethylen-Propylen-Kautschuk, Polyurethan-Kautschuk usw. und Kautschukderivate wie Cyclokautschuk. Bevorzugt werden Styrol-Butadien-Kautschuke mit den Visbreaker-Rückständen gemischt.

Als Polyolefine werden Polyethylen, Polypropylen, Polyisobutylen und Ethylencopolymerisate eingesetzt, vorzugsweise jedoch Polyethylenabfälle.

Als Füllstoffe können neben Gesteinsmehlen wie Schiefermehl, Kaolin und Talkum auch anorganische und organische Fasern verwendet werden. Sie werden vorzugsweise in einer Menge von 40 bis 50 Gew.-% - bezogen auf das Gemisch - verwendet.

Die Eigenschaften der erfindungsgemäßen Masse lassen sich in an sich bekannter Weise durch den Zusatz von weiteren Polymeren wie Kohlenwasserstoffharze (z.B. Cumaron-Inden-Harz), Polyvinylchlorid, Naturharze (z.B. Montanharz und Kolophonium), polymere Acrylate und Methacrylate, Polyadditionsverbindungen (z.B. Polyurethane und Epoxidharze) und Polykondensationsprodukte (z.B. Polyamide, Phenolharze und Polyester) variieren. Da nicht alle diese Polymere in aliphatischen Kohlenwasserstoffen löslich sind, müssen gegebenenfalls aromatische Öle als Weichmacher zugesetzt werden.

Die Erfindung wird anhand der nachfolgenden Beispiele näher erläutert, ohne darauf beschränkt zu sein.

Beispiel 1

48,7 Gew.-Teile eines Visbreaker-Rückstandes mit einem Verhältnis Paraffine/Naphthene von 50/50, einem Erweichungspunkt EP (R.u.K.) von 40 °C, einem Siedebeginn von 480 °C, einer Penetration von 208 . 1/10 mm und einem Flammpunkt von 294 °C werden mit 2,3 Gew.-Teilen eines Styrol-Butadien-Kautschuks (Finaprene 411 P) und 49,0 Gew.-Teilen Schiefermehl bei 120 °C 90 min in einem Rührkessel homogen gemischt. Die erhaltene bituminöse Masse ist durch folgende Daten gekennzeichnet:
EP (R.u.K.) 97 °C
Penetration 25 . 1/10 mm
Kältbruchfestigkeit bei -10 °C erfüllt.

Überraschenderweise treten bei der Masse keine Entmischungserscheinungen auf. Die daraus gegossenen 5 mm starken Probestücke haben trotz des hohen Füllergehaltes eine gute Flexibilität und bei Verformung ein hohes Rückstellvermögen. Diese Masse ist als Deckmasse für Dachdichtungsbahnen gut geeignet.

Beispiel 2

58,4 Gew.-Teile eines Visbreaker-Rückstandes mit einem Verhältnis Paraffine/Naphthene von 70/30, einem EP (R.u.K.) von 36 °C, einem Siedebeginn von 370 °C, einer Penetration von 288 . 1/10 mm und einem Flammpunkt von 292 °C werden mit 1,6 Gew.-Teilen eines Styrol-Butadien-Kautschuks wie im Beispiel 1 und 40 Gew.-Teilen Kaolin bei 120 °C 80 min im Rührkessel gemischt.
Das Gemisch weist folgende Kenndaten auf:
EP (R.u.K.) 80 °C
Penetration 71 . 1/10 mm

Beispiel 3 (Vergleich)

Als Vergleich wird das Beispiel 2 wiederholt, wobei der Visbreaker-Rückstand durch Bitumen B 200 ersetzt wird. Die erhaltene Masse hat bei etwa gleicher Penetration von 74 . 1/10 mm einen wesentlich geringeren EP (R.u.K.) von nur 62 °C und somit eine geringere Wärmestandsfestigkeit. Beim Gießen eines Probestreifens tritt eine Entmischung infolge des hohen Füllergehaltes auf. Deckmassen enthalten üblicherweise nur 20 bis 25 Gew.-% Füllstoffe.

Beispiel 4

52 Gew.-Teile eines Visbreaker-Rückstandes wie im Beispiel 1 wird mit 8 Gew.-Teilen eines Styrol-Butadien-Kautschuks (Styrol-Butadien-Blockpolymer mit 30 % Styrol) und 40 Gew.-Teilen Schiefermehl bei 180 °C 90 min verrührt. Das Gemisch ist durch folgende Daten gekennzeichnet:
EP (R.u.K.) 125 °C
Penetration 21 . 1/10 mm
Kältebruchfestigkeit bei -20 °C erfüllt.

Die Masse zeigt ausgezeichnete Eigenschaften, wie sie nur hochwertige Deckmassen für Polymer-Bitumen-Bahnen aufweisen.

Beispiel 5

56,5 Gew.-Teile eines Visbreaker-Rückstandes wie im Beispiel 2 wird mit 2,5 Gew.-Teilen Styrol-Butadien-Kautschuk (Finaprene 411 P), 1 Gew.-Teil Polyethylen-Abfall und 40 Gew.-Teilen Schiefermehl bei 150 °C 90 min gerührt. Die erhaltene Masse hat folgende Kenngrößen:
EP (R.u.K.) 99 °C

Penetration 37 . 1/10 mm
Kältebruchfestigkeit bei -10 °C erfüllt
und entspricht so einem Blasbitumen B 100/40.
Von allen erfindungsgemäßen Massen wurden 5 mm dicke Probestücke von 100 x 100 mm gegossen, um die Wärmebeständigkeit nach DIN 52 123 zu untersuchen. Keine der Proben zeigte innerhalb von 2 h bei 70 °C ein Abtropfen oder eine stellenweise Verdickung. Daraus und aus den in den Beispielen angebenen Kenngrößen wurde geschlossen, daß die erfindungsgemäßen bituminösen Massen sich zur Herstellung von Deckschichten bituminöser Dachdichtungsbahnen eignen.

Beispiel 6

95,5 Gew.-Teile eines Visbreaker-Rückstandes gemäß Beispiel 1 werden mit 4,5 Gew.-Teilen eines Styrol-Butadien-Kautschuks (Finaprene 411 P) gemischt. Mit dieser Imprägniermasse (Dichte = 1,02 g/cm³, EP (R.u.K.) = 94 °C) wird ein genadeltes Polyesterfaservlies (265 g/m²) durch Tauchen bei 145 °C imprägniert. Das imprägnierte Vlies wird auf einer Dachbahnenanlage mit einer Deckmasse aus 52,5 Gew.-Teilen eines Visbreaker-Rückstandes gemäß Beispiel 1, 2,5 Gew.-Teilen eines Styrol-Butadien-Kautschuks (Finaprene 411 P) und 45 Gew.-Teilen Schiefermehl 4900 bei 140 °C beschichtet und beiseitig mit Talkum 30/100 abgestreut. Die Deckmasse hat eine Dichte von 1,37 g/cm³, EP (R.u.K.) von 93 °C und eine Penetration von 32 . 1/10 mm. Die Beschaffenheitsangaben der Bahn sind in der Tabelle wiedergegeben.

Beispiel 7

Das Beispiel 6 wird dahingehend abgeändert, daß ein Glasgewebe G 200 (Qualität 94032 Basaltvlies Weisenau) bei 140 °C imprägniert und bei 130 °C mit einer Deckmasse beschichtet wird. Die Beschaffenheitsangaben sind in der Tabelle aufgeführt.
Die in den Beispielen 6 und 7 beschriebenen Bahnen entsprechen den Anforderungen nach DIN 52 131 und sind daher als Schweißbahnen verwendbar. Wegen der geringen Viskosität gegenüber üblichen Beschichtungen auf der Basis von geblasenen Bitumina 85/25, 85/40, 100/25 und 100/40 können die erfindungsgemäßen Deckmassen bei Temperaturen unterhalb von 150 °C, vorzugsweise in einem Temperaturbereich von 120 bis 140 °C auf die Verstärkungseinlage aufgetragen werden. Normalerweise liegt die Beschichtungstemperatur bei üblichen Deckmassen zwischen 150 und 180 °C (Bitumen und Asphalt, Seite 98).
Als Verstärkungseinlage können Gewebe und Vliese aus organischen und anorganischen Fasern wie Glasgewebe, Glasvliese, Rohfilzpappen, Polyestergewebe, Polyestervliese und Jutegewebe ebenso verwendet werden wie Metall- oder Kunststoffolien. Für besondere Anwendungsfälle können die Verstärkungseinlagen auf ihrer Ober- und Unterseite mit verschiedenen Deckmassen beschichtet werden, die unterschiedliche Mengen an Füllstoffen und/oder Kunststoffen enthalten. Es ist bekannt, daß hohe Styrol-Butadien-Styrol(SBS)-Zusätze die Alterungsbeständigkeit einer Deckmasse erhöhen, aber gleichzeitig ihre Schweißbarkeit vermindern. Für solche Fälle ist es vorteilhaft z.B. für die obere Lage einer Dachabdichtung eine Schweißbahn zu verwenden, auf deren Oberseite sich eine Deckmasse mit höherem SBS-Gehalt (z.B. 15 % bezogen auf den Rückstand) als auf der Unterseite (z.B. 5 % bezogen auf den Rückstand) befindet.

## Tabelle

### Beschaffenheit der Deckbahnen

| Beispiel | | 6 | 7 |
|---|---|---|---|
| Einlage | | Polyesterfaservlies | Glasgewebe G 200 |
| Dicke der Bahn | mm | 3,8–4,1 | 4,0–4,25 |
| Gesamtgewicht | g/m$^2$ | 5250 | 5350 |
| Einlage | g/m$^2$ | 265 | 195 |
| Tränkung | g/m$^2$ | 1046 | 248 |
| Deckmasse | g/m$^2$ | 3873 | 4841 |
| Bestreuung | g/m$^2$ | 66 | 66 |
| Kältebruchfestigkeit | °C | −12 erfüllt | −11 erfüllt |
| Wärmestandfestigkeit DIN 53363 | längs N | 216 | |
| | quer N | 269 | |
| Bruchfestigkeit DIN 52131 | längs N/5 cm | 875 | 1000 |
| | quer N/5 cm | 778 | 1000 |
| Bruchdehnung DIN 52131 | längs % | 59 | 2,0 |
| | quer % | 61 | 1,5 |
| Schweißbarkeit nach Quaschny | s | 9–10 | 9–10 |
| Wärmebeständigkeit 2 h DIN 52131 | °C | 80 erfüllt | 80 erfüllt |
| Wasserlagerung | | 40 Tage kein Wasser | 40 Tage kein Wasser |
| Ausrolltest | | −2°C erfüllt | −2°C erfüllt |
| | | −5°C nicht erfüllt | −5°C nicht erfüllt |
| Lagerrißbildung | | keine Risse | keine Risse |
| 70°C Lagerung | | kein Ausschwitzen nach 7 Tagen | kein Ausschwitzen nach 7 Tagen |

## Patentansprüche

1. Bituminöse, mit Kunststoffen und Füllstoffen modifizierte Masse, dadurch gekennzeichnet, daß sie aus einem Gemisch aus einem Rückstand, erhältlich aus dem Visbreaking-Prozeß beim Einsatz von überwiegend paraffinisch-naphthenischen Rohöldestillationsrückständen, mit einem Flammpunkt oberhalb 250°C, einem Siedebeginn im Bereich von 340 bis 550°C, einem Erweichungspunkt (Ring und Kugel) von 25 bis 65°C und einer Penetration von maximal 300 · 1/10 mm, 1 bis 25 Gew.-% − bezogen auf das Gemisch − eines natürlichen oder synthetischen Kautschuks, eines Polyolefins oder einer Mischung aus diesen Stoffen und 20 bis 50 Gew.-% − bezogen auf das Gemisch − eines Füllstoffs besteht und bei einer Temperatur zwischen 120 und 190°C homogen vermischt ist, und gegebenenfalls Weichmacher und/oder weitere Polymere enthält.

2. Bituminöse Masse nach Anspruch 1, dadurch gekennzeichnet, daß der Visbreaker-Rückstand einen Erweichungspunkt von etwa 40 °C und einen Siedebeginn von etwa 480 °C hat.

3. Bituminöse Masse nach Ansprüchen 1 und 2, dadurch gekennzeichnet, daß sie 2,5 bis 5 Gew.-% − bezogen auf den Visbreaker-Rückstand − eines Styrol-Butadien-Kautschuks enthält.

4. Bituminöse Masse nach den Ansprüchen 1 bis 3, dadurch gekennzeichnet, daß sie als Füllstoff Schiefermehl oder Kaolin in einer Menge von 40 bis 50 Gew.-% enthält.

5. Verwendung der bituminösen Masse nach den Ansprüchen 1 bis 4 als Deckmasse zur Beschichtung von Verstärkungseinlagen wie Gewebe, Vliese und Folien bei der Herstellung bituminöser Dachdichtungsbahnen bei Temperaturen unterhalb von 150 °C.

6. Verwendung der bituminösen Masse nach den Ansprüchen 1 bis 4 als Deckmasse für die Beschichtung von mit einer Tränkmasse aus mit Kunststoffen modifizierten Visbreaker-Rückständen imprägnierten Vliesen oder Geweben aus Glas- oder Polyesterfasern im Temperaturbereich von 120 bis 140 °C.

7. Verwendung der bituminösen Masse nach den Ansprüchen 1 bis 4 als Deckmasse mit unterschiedlicher Zusammensetzung für die Ober- und Unterseite der Verstärkungseinlagen bei der Dachbahnen-Herstellung.

## Claims

1. A bituminous composition, modified with plastics materials and fillers, characterized in that it comprises a mixture of a residue, obtainable from the Visbreaking process by the introduction of predominantly paraffinic-naphthenic crude-oil distillation residues, having a flash point above 250°C, an initial boiling point in the range of 340 to 550°C, a softening point (ring and ball) of 25 to 65°C and a penetration of a maximum of 300 x 1/10 mm, 1 to 25% by weight – relative to the mixture – of a natural or synthetic rubber, a polyolefin or a mixture of these substances and 20 to 50% by weight – relative to the mixture – of a filler and is mixed to homogeneity at a temperature of between 120 and 190°C and, where appropriate, contains softeners and/or additional polymers.

2. A bituminous composition according to Claim 1, characterized in that the Visbreaker residue has a softening point of approximately 40°C and an initial boiling point of approximately 480°C.

3. A bituminous composition according to Claims 1 and 2, characterized in that it contains 2.5 to 5% by weight – relative to the Visbreaker residue – of a styrene-butadiene rubber.

4. A bituminous composition according to Claims 1 to 3, characterized in that it contains ground slate or kaolin in a quantity of 40 to 50% by weight as a filler.

5. The use of the bituminous composition according to Claims 1 to 4 as a cover paste for coating reinforcement inlays such as fabrics, fleeces and foils in the manufacture of bituminous roof-sealing strips at temperatures below 150°C.

6. The use of the bituminous composition according to Claims 1 to 4 as a cover paste for coating – in the temperature range of 120 to 140°C – fleeces or fabrics of glass or polyester fibres impregnated with an impregnating agent of Visbreaker residues modified with plastics materials.

7. The use of the bituminous composition according to Claims 1 to 4 as a cover coat with a different composition for the top side and underside of reinforcement inlays in the manufacture of roof strips.

## Revendications

1. Masse bitumineuse modifiée par des matières synthétiques et des matières de charge, caractérisée en ce qu'elle consiste en un mélange d'un résidu pouvant être obtenu à partir du procédé de viscoréduction lors de la mise en œuvre de résidus de distillation de pétrole brut, en prédominance paraffiniques-naphténiques, ayant un point d'inflammation situé au-dessus de 250°C, un début de distillation dans le domaine de 340 à 550°C, un point de ramollissement (anneau et bille) de 25 à 65°C et une pénétration de 300 · 1/10 mm au maximum, de 1 à 25% en poids – par rapport au mélange – d'un caoutchouc naturel ou synthétique, d'une polyoléfine ou d'un mélange de ces substances et de 20 à 50% en poids – par rapport au mélange – d'une matière de charge, qu'elle est mélangée de façon homogène à une température entre 120 et 190°C et contient éventuellement des plastifiants et/ou d'autres polymères.

2. Masse bitumineuse selon la revendication 1, caractérisée en ce que le résidu de viscoréduction présente un point de ramollissement d'environ 40°C et un début d'ébullition d'environ 480°C.

3. Masse bitumineuse selon les revendications 1 et 2, caractérisée en ce qu'elle contient 2,5 à 5% en poids – par rapport au résidu de viscoréduction – d'un caoutchouc de styrène-butadiène.

4. Masse bitumineuse selon les revendications 1 à 3, caractérisée en ce qu'elle contient en tant que matière de charge de la poudre d'ardoise ou du kaolin en une quantité de 40 à 50% en poids.

5. Application de la masse bitumineuse selon les revendications 1 à 4, en tant que masse de surfaçage pour le revêtement de garnissages de renforcement tels que des produits tissés, des non tissés et des feuilles lors de la fabrication de panneaux d'étanchéité de toiture bitumineux à des températures au-dessous de 150°C.

6. Application de la masse bitumineuse selon les revendications 1 à 4, en tant que masse de surfaçage pour le revêtement de nappes ou de tissés en fibres de verre ou de polyester imprégnés d'une matière d'imprégnation obtenue à partir de résidus de viscoréduction modifiés par des matières synthétiques, dans un domaine de températures de 120 à 140°C.

7. Application de la masse bitumineuse selon les revendications 1 à 4, en tant que masse de surfaçage avec une composition variable pour les faces supérieure et inférieure des garnissages de renforcement dans la fabrication de panneaux d'étanchéité de toiture.